# EUROPÄISCHE PATENTANMELDUNG

(11) **EP 4 653 390 A1**
(43) Veröffentlichungstag der Anmeldung: **26.11.2025**
(21) Anmeldenummer: 24020165.7
(22) Anmeldetag: 23.05.2024
(51) Int. Cl.: C01B 3/02, C01B 3/34

(54) **VERFAHREN UND ANLAGE ZUR HERSTELLUNG EINES WASSERSTOFFPRODUKTS**

(71) Anmelder: Linde GmbH, 82049 Pullach (DE)
(72) Erfinder: Behrens, Axel, 82049 Pullach (DE); Bohn, Jan-Peter, 82049 Pullach (DE); Müller-Thorwart, Ole, 82049 Pullach (DE); Reinke, Michael, 82049 Pullach (DE)
(74) Vertreter: Fischer, Werner

(57) **Zusammenfassung**

Es wird ein Verfahren (100) zur Gewinnung eines Wasserstoffprodukts (20) vorgeschlagen, wobei das Verfahren (100) das Bereitstellen eines Produktgemischs (12) unter Verwendung einer elektrisch beheizten Reformierung (102), wobei das Produktgemisch (12) Wasserstoff, Kohlenmonoxid und Kohlendioxid enthält, das Bereitstellen eines Trenneinsatzgases (19) unter Verwendung des Produktgemischs (12) oder eines Teils hiervon, wobei das Trenneinsatzgas (19) Wasserstoff und Kohlenmonoxid enthält, das Bereitstellen des Wasserstoffprodukts (20) und eines Restgases (21) unter Verwendung des Trenneinsatzgases (19) oder eines Teils hiervon und unter Verwendung einer Wasserstoffabtrennung (107), und das Bereitstellen von elektrischer Energie (23, 24) unter Verwendung des Restgases (21) oder eines Teils hiervon und unter Verwendung einer Brennstoffzellenanordnung (111) und/oder eines Gasmotors umfasst, wobei die elektrisch beheizte Reformierung (102) unter Verwendung der elektrischen Energie (23) oder eines Teils hiervon betrieben und/oder in dem Verfahren (100) verwendeter Dampf (9, 10, 13) unter Verwendung der elektrischen Energie (23) oder eines Teils hiervon bereitgestellt wird. Eine entsprechende Anlage ist ebenfalls Gegenstand der vorliegenden Erfindung.

## Beschreibung

### Gebiet

Die vorliegende Offenbarung betrifft ein Verfahren zur Herstellung eines Wasserstoffprodukts und eine Anlage zur Durchführung des Verfahrens.

### Hintergrund

Die Herstellung von Wasserstoff im großtechnischen Maßstab erfolgt derzeit überwiegend auf Basis von Kohlenwasserstoffen in befeuerten Reaktoren. Es besteht jedoch der Wunsch, die direkten Kohlendioxidemissionen bei der Herstellung von Wasserstoff zu reduzieren oder vorteilhafterweise zu eliminieren.

Bis zur umfangreicheren großtechnischen Realisierung von Verfahren zur Herstellung von Wasserstoff auf Grundlage der Elektrolyse von Wasser unter Einsatz von regenerativ erzeugter elektrischer Energie, sogenanntem "grünem" Wasserstoff, können bestimmte Brückentechnologien eingesetzt werden, in denen die Kohlendioxidemissionen reduziert werden.

Derartige Technologien umfassen insbesondere die Rückgewinnung von Kohlendioxid aus Rauch- und/oder Prozessgasen und die Lagerung (Sequestrierung) oder Verwendung des Kohlendioxids (engl. Carbon (Dioxide) Capture and Storage, CCS bzw. Carbon (Dioxide) Capture and Utilization, CCU). In diesem Fall wird der gewonnene Wasserstoff im Gegensatz zu "grauem" Wasserstoff, bei dessen Herstellung keine Rückgewinnung von Kohlendioxid erfolgt, auch als "blauer" Wasserstoff bezeichnet.

Wenngleich jüngere Entwicklungen hinsichtlich der Herstellung von blauem Wasserstoff bereits bedeutende Verbesserungen mit sich gebracht haben, besteht weiterhin der Bedarf nach verbesserten Verfahren.

### Übersicht

Vor diesem Hintergrund werden ein Verfahren zur Herstellung eines Wasserstoffprodukts sowie eine Anlage zur Durchführung des Verfahrens mit den Merkmalen der unabhängigen Ansprüche vorgeschlagen. Ausgestaltungen sind jeweils Gegenstand der abhängigen Ansprüche und der nachfolgenden Beschreibung.

Das vorgeschlagene Verfahren zur Gewinnung eines Wasserstoffprodukts umfasst das Bereitstellen eines Produktgemischs unter Verwendung einer elektrisch beheizten Reformierung, wobei das Produktgemisch Wasserstoff, Kohlenmonoxid, Kohlendioxid, Wasser und Methan enthält. Es versteht sich, dass das Produktgemisch auch Restanteile nicht umgesetzten Methans bzw. von anderen eingesetzten Kohlenwasserstoffen enthalten kann. Die Aufzählung der enthaltenen Komponenten ist nicht abschließend.

Ferner umfasst das Verfahren das Bereitstellen eines Trenneinsatzgases unter Verwendung des Produktgemischs oder eines Teils hiervon, wobei das Trenneinsatzgas Wasserstoff, Kohlenmonoxid und Methan enthält. Es versteht sich, dass in dem Trenneinsatzgas ebenfalls Restanteile nicht umgesetzten Methans bzw. von anderen eingesetzten Kohlenwasserstoffen enthalten sein können.

Das Verfahren umfasst weiterhin das Bereitstellen des Wasserstoffprodukts und eines Restgases unter Verwendung des Trenneinsatzgases oder eines Teils hiervon und unter Verwendung einer Wasserstoffabtrennung, und das Bereitstellen von elektrischer Energie unter Verwendung des Restgases oder eines Teils hiervon und unter Verwendung einer Brennstoffzellenanordnung und/oder eines, insbesondere mit einem Generator gekoppelten, Gasmotors, wobei die elektrisch beheizte Reformierung unter Verwendung der elektrischen Energie oder eines Teils hiervon betrieben und/oder in dem Verfahren verwendeter Dampf unter Verwendung der elektrischen Energie oder eines Teils hiervon bereitgestellt wird.

Aspekte des vorgeschlagenen Verfahrens umfassen die Bereitstellung eines elektrifizierten Dampfreformers mit integrierter Energieversorgung. Die vorgeschlagenen Maßnahmen reduzieren die Kohlendioxidemissionen bezogen auf die Menge des erzeugten Wasserstoffprodukt, wenn erneuerbare elektrische Energie zur

Beheizung eingesetzt wird. Jegliche Abgase bei der Reformierung werden vermieden, es ist keine Verbrennung von Einsatzgas wie Erdgas erforderlich. Da kein Erdgas verbrannt werden muss, ist kein spezieller Ofen erforderlich, was zu einem geringeren Platzbedarf führt und somit einen kompakteren Reformer ermöglicht.

Da in bestimmten Ausgestaltungen des vorgeschlagenen Verfahrens, nämlich insbesondere in Ausgestaltungen, in denen eine Brennstoffzellenanordnung verwendet wird, kein Rauchgas erzeugt wird, ist auch kein Rauchgasentstickungssystem erforderlich. Dies verbessert die Erstellungs- und Betriebskosten des Systems und vermeidet die Handhabung von Chemikalien für das Rauchgasentstickungssystem. Wärmeverluste aus dem Rauchgas werden eliminiert. Das Abgas der Wasserstoffabtrennung wird für die zusätzliche Wärme- und/oder Stromerzeugung genutzt, ohne dass ein mit Kohlenwasserstoffen befeuerter Erhitzer eingesetzt werden muss. Auf diese Weise wird der Gesamtwirkungsgrad der Anlage verbessert.

Die interne Nutzung der erzeugten elektrischen Energie reduziert den Energiebedarf aus dem Netz. Die interne Nutzung der erzeugten Wärme ist vorteilhaft für die Wärmeintegration und verbessert den Gesamtwirkungsgrad. Die Wärme oder die elektrische Energie können auch zur externen Nutzung exportiert werden. Für einen stabilen Betrieb der Anlage ist kein Zusatzgas in Form von frisch eingesetztem Brenngas, insbesondere Erdgas, erforderlich, das in herkömmlichen Anlagen zur besseren Regelung von Brennern dient. Dadurch entstehen weniger Kohlendioxidemissionen. Durch die Nutzung der Wärme zur Erzeugung elektrischer Energie werden die Wärmeverluste aus dem Ofenfeuerraum und der Rauchgaswärmerückgewinnung eliminiert und der Gesamtwirkungsgrad verbessert. Die elektrische Beheizung bietet erhebliche Vorteile für den dynamischen Betrieb, da die Lastwechsel viel schneller erfolgen können als bei einem befeuerten System. Potenziell wird in entsprechenden Ausgestaltungen auch das Teillastverhalten verbessert (hin zu niedrigeren Lastraten).

Weitere Vorteile der vorgeschlagenen Maßnahmen werden insbesondere unter Bezugnahme auf Ausgestaltungen der Erfindung unten erläutert.

In bestimmten Ausgestaltungen wird das Trenneinsatzgas unter Verwendung des Produktgemischs oder eines Teils hiervon bereitgestellt, das einer geeigneten Aufbereitung unterworfen wird. Auf diese Weise kann eine Abtrennung von rückzugewinnenden und/oder zu sequestrierenden Komponenten und/oder eine Konditionierung für die Wasserstoffabtrennung erfolgen.

Bestimmte, hier vorgeschlagene Ausgestaltungen umfassen, dass die Aufbereitung eine Hoch-, Mittel-, Isothermal- und/oder Niedertemperaturkonvertierung von Kohlenmonoxid und Wasserdampf zu Kohlendioxid und Wasserstoff umfasst. Mittels entsprechender Konvertierungsverfahren, d.h. einer Wassergasshift, ist eine Steigerung der Ausbeute an Wasserstoff möglich.

In bestimmten Ausgestaltungen umfasst die Aufbereitung eine Kohlendioxidabtrennung, in der ein erster Kohlendioxidstrom bereitgestellt wird. Hierbei können sämtliche Verfahren zum Einsatz kommen, wie sie für entsprechende Zwecke bekannt sind, beispielsweise eine Amin- und/oder Laugewäsche und/oder adsorptive Verfahren. Auch eine Grob- und Feinreinigung mittels unterschiedlicher Verfahren kann in bestimmten Ausgestaltungen vorgesehen sein.

Bestimmte Ausgestaltungen des vorgeschlagenen Verfahrens umfassen, dass der erste Kohlendioxidstrom oder ein Teil hiervon unter Bereitstellung eines zweiten Kohlendioxidstroms einer Kohlendioxidaufbereitung unterworfen wird. Die Kohlendioxidaufbereitung kann insbesondere eine Trocknung, Verdichtung und/oder Verflüssigung umfassen, so dass das abgetrennte Kohlendioxid an stromabwärts angeordnete Schritte angepasst werden kann.

In entsprechenden Ausgestaltungen wird der zweite Kohlendioxidstrom oder ein Teil hiervon einer Kohlendioxidsequestrierung unterworfen, so dass Kohlendioxidemissionen reduziert oder vollständig eliminiert werden können.

In bestimmten Ausgestaltungen wird die Wasserstoffabtrennung unter Verwendung einer Druckwechseladsorptionseinrichtung durchgeführt. Dies ermöglicht eine Bereitstellung von Wasserstoff hoher Reinheit in einem Einzelschritt.

Die vorgeschlagene Anlage zur Bereitstellung eines Wasserstoffprodukts ist zum Bereitstellen eines Produktgemischs unter Verwendung einer elektrisch beheizten Reformierung, wobei das Produktgemisch Wasserstoff, Kohlenmonoxid, Kohlendioxid, Wasser und Methan enthält, zum Bereitstellen eines Trenneinsatzgases unter Verwendung des Produktgemischs oder eines Teils hiervon, wobei das Trenneinsatzgas Wasserstoff, Kohlenmonoxid und Methan enthält, zum Bereitstellen des Wasserstoffprodukts und eines Restgases unter Verwendung des Trenneinsatzgases oder eines Teils hiervon und unter Verwendung einer Wasserstoffabtrennung und zum Bereitstellen von elektrischer Energie unter Verwendung des Restgases oder eines Teils hiervon unter Verwendung einer Brennstoffzellenanordnung und/oder eines Gasmotors, wobei die elektrisch beheizte Reformierung unter Verwendung der elektrischen Energie oder eines Teils hiervon betrieben und/oder in dem Verfahren verwendeter Dampf unter Verwendung der elektrischen Energie oder eines Teils hiervon bereitgestellt wird.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen von hier vorgeschlagenen Lösungen werden nachfolgend rein beispielhaft unter Bezugnahme auf die beigefügte Zeichnung beschrieben, wobei
Figur 1 ein Verfahren zur Gewinnung von Wasserstoff veranschaulicht; und
Figur 2 ein Verfahren gemäß einer vorgeschlagenen Ausgestaltung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorstehenden und nachfolgenden Erläuterungen und Definitionen können für alle oder einen Teil der hier vorgestellten Ausgestaltungen gelten, und die Erläuterung bestimmter Aspekte im Zusammenhang mit nur einem Teil oder einer der Ausgestaltungen soll keineswegs dahingehend verstanden werden, dass diese Aspekte nicht auch mit anderen oder allen Ausgestaltungen, soweit technisch möglich und sinnvoll, verwirklicht sein können.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff) ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch für Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Zur Herstellung von Wasserstoff ist eine Reihe von Verfahren bekannt und in einschlägigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben.

Die Erzeugung von Wasserstoff kann dabei durch Umsetzung von gasförmigen, festen oder flüssigen Kohlenstoffquellen wie Erdgas, Naphtha oder Kohle erfolgen. Hierbei kann insbesondere eine katalytische Reformierung in Ausgestaltungen wie beispielsweise Dampfreformierung (engl. Steam Methane Reforming, SMR) mit Gasbeheizung oder elektrischer Beheizung zum Einsatz kommen. Ein weiterer Weg zur Herstellung von Wasserstoff aus entsprechenden Kohlenstoffquellen umfasst die katalytische Autothermreformierung (engl. Autothermal Reforming, ATR) und nicht katalytische partielle Oxidation (engl. Partial Oxidation, POX). Auch Kombinationen entsprechender Verfahren können eingesetzt werden.

In einem konventionellen Verfahren zur Dampfreformierung wird die endotherme Reformierungsreaktion durch externe Wärmezufuhr angetrieben, z.B. durch die Verbrennung von Erdgas und Restgas aus einer Wasserstoffabtrennung, die insbesondere mittels Druckwechseladsorption erfolgt.

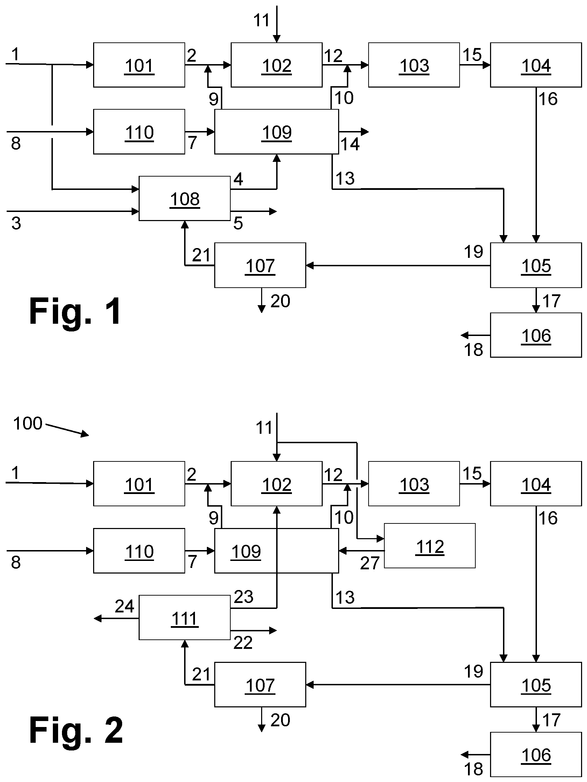

In Figur 1 ist ein Verfahren zur Herstellung von Wasserstoff veranschaulicht, das entsprechend durchgeführt wird. Das Verfahren umfasst eine Einsatzgasaufbereitung 101, eine elektrisch beheizte Dampfreformierung 102, eine Hochtemperaturkonvertierung 103, eine Niedertemperaturkonvertierung 104, eine Kohlendioxidabtrennung 105, eine Kohlendioxidaufbereitung 106, eine Wasserstoffabtrennung 107, eine Feuerungsheizung bzw. ein befeuerter Ofen 108, eine wärmeintegrierte Dampfproduktion 109 und eine Wasserbehandlung 110. Mit diesen Begriffen sind jeweils Verfahrensschritte und entsprechend eingerichtete Apparate bezeichnet.

Dem Verfahren gemäß Figur 1 wird ein Einsatzgas 1, beispielsweise Erdgas, zugeführt, das in der Einsatzgasaufbereitung 101 unter Erhalt eines aufbereiteten Einsatzgases 2 in geeigneter Weise behandelt, beispielsweise entschwefelt, wird. Ein Teil des Einsatzgases 1 kann auch, unter Umgehung der Einsatzgasbehandlung 101, der Feuerungsheizung 108 zugeführt werden und dort mit Verbrennungsluft 3 verbrannt werden. In der Feuerungsheizung 108 gebildete Wärme kann, wie mit einem Pfeil 4 angegeben, in der Dampfproduktion 109 genutzt werden. Wie mit einem Pfeil 5 angegeben, kann in der Feuerungsheizung 108 gebildetes Rauchgas, ggf. nach einer Aufbereitung, aus dem Verfahren ausgeführt werden.

Die Dampfproduktion 109 kann mit Kesselspeisewasser 7 versorgt werden, das in einer Wasseraufbereitung 110 beispielsweise durch Deionisieren und/oder anderweitiges Reinigen aus Rohwasser 8 bereitgestellt werden kann. In der Dampfproduktion 109 können Prozessdampf 9, der zusammen mit dem Einsatzgas 2 der Dampfreformierung 102 zugeführt wird, weiterer Prozessdampf 10, der einem in der Dampfreformierung 102 unter Verwendung von elektrischem Strom 11 gebildeten Produktgemisch 12 stromauf der Hochtemperaturkonvertierung 103 zugespeist wird, Regenerierdampf 13, der in der Kohlendioxidabtrennung 105 zum Austreiben von Kohlendioxid aus einem flüssigen Absorptionsmittel verwendet werden kann, und ggf. Exportdampf 14 gebildet werden.

Das Gemisch aus Produktgemisch 12 und Prozessdampf 10 wird in der Hochtemperaturkonvertierung 103 konvertiert und anschließend als hochtemperaturkonvertiertes Prozessgas 15 der Niedertemperaturkonvertierung 104 unterworfen, wodurch niedertemperaturkonvertiertes Prozessgas 16 erhalten wird, das der Kohlendioxidabtrennung 105 unterworfen wird. Die Kohlendioxidabtrennung 105 kann insbesondere unter Verwendung eines aminhaltigen Absorptionsmittels bekannter Art betrieben werden, aus dem, wie erwähnt, gelöstes Kohlendioxid mit dem Regenerierdampf 13 ausgetrieben werden kann.

In der Kohlendioxidabtrennung 105 abgetrenntes Kohlendioxid 17 kann in der Kohlendioxidkonditionierung 106 beispielsweise getrocknet und verdichtet werden, wodurch konditioniertes Kohlendioxid 18 erhalten wird. Ein in der Kohlendioxidabtrennung 105 verbleibendes kohlendioxidabgereichertes Prozessgas 19 wird der Wasserstoffabtrennung 107 unterworfen, wo ein Wasserstoffprodukt 20 und ein Rest- oder Tailgas 21 erhalten wird. Das Rest- oder Tailgas 21 wird in der Feuerungsheizung 108 verfeuert und damit thermisch genutzt. Das kohlendioxidabgereicherte Prozessgas 19 wird und wurde in der vorliegenden Offenbarung auch als "Trenneinsatzgas" bezeichnet.

Bei dem Verfahren gemäß Figur 1 entsteht Kohlendioxid nicht nur als Nebenprodukt bei der Synthesegaserzeugung 102, sondern auch im Rauchgas 5, was die Abscheidung des Kohlendioxids kompliziert und kostenintensiv macht (z.B. wegen des niedrigen Drucks des Rauchgases 5 und von Waschmittelverlusten in die Atmosphäre). Man kann die Emissionen von Kohlendioxid aus dem Rauchgas 5 vermeiden, wenn die Reaktionswärme durch elektrische Heizung mit erneuerbarer elektrischer Energie bereitgestellt wird. Auf diese Weise kann der Gesamtverbrauch an Einsatzgas (z.B. Erdgas) reduziert werden, und zwar in einer Größenordnung von ca. 20%.

Kritisch bei der elektrischen Beheizung ist jedoch, dass hierdurch eine Senke für das Restgas 21 aus der Wasserstoffabtrennung 107, das in konventionellen Verfahren, beispielsweise wie in Figur 1 dargestellt zusammen mit Erdgas als Wärmequelle für die endotherme Reaktion verbrannt wird, wegfällt.

Hier vorgeschlagene Ausgestaltungen bieten Lösungen mit reduzierten Kohlendioxidemissionen mit gleichzeitiger vorteilhafter Nutzung eines Restgases 21 aus einer Wasserstoffabtrennung 107. In herkömmlichen, elektrisch beheizten Dampfreformierungsverfahren wird ein solches Restgas 21 durch Verbrennung in einem befeuerten Erhitzer genutzt. Um die Steuerung dieses Brennstoffs für den befeuerten Erhitzer zu ermöglichen, ist eine Zugabe von Einsatzgas 1 wie Erdgas (so genanntes Make-up-Gas) zum Restgas 21 erforderlich, da ein solches Einsatzgas 1 immer verfügbar ist (das Restgas 21 kann bei Laständerungen, An- und Abfahren usw. schwanken). In der Regel werden 10 bis 25% der erzeugten Wärme aus dem Einsatzgasanteil gewonnen.

Hier vorgeschlagene Ausgestaltungen umfassen, die benötigte Wärme für die Reformierungsreaktion durch elektrische Heizung bereitzustellen. Das bei der Wasserstoffabtrennung 107 entstehende Restgas 21 wird dabei in einer Brennstoffzellenanordnung zur Stromerzeugung und/oder einem Gasmotor zur Strom-/Wärmeerzeugung verwendet. Auf diese Weise kann ein Teil der benötigten elektrischen Energie innerhalb der Anlage erzeugt werden und diese ist somit teilweise autark. Es wird also weniger elektrische Energie aus dem Netz benötigt.

Im Falle der Wärmeerzeugung kann die Wärme in die Gesamtanlage integriert werden und verbessert die Energieeffizienz (z.B. durch Vorwärmung von Strömen). Die Wärme kann auch für den Export von Wärme in ein Netz (Kraft-Wärme-Kopplung) oder für die Erzeugung von elektrischer Energie durch einen Motor zur Einspeisung ins Netz genutzt werden.

Durch den Einsatz einer Brennstoffzellenanordnung oder eines Gasmotors entfällt die zusätzliche Einsatzgasbeimischung (z.B. Erdgas) zum Restgas im Falle einer konventionellen elektrisch beheizten Dampfreformierung mit befeuertem Heizgerät. Daher entstehen keine zusätzlichen Kohlendioxidemissionen aus dieser Quelle. Jedes Kohlenstoffatom, das in die Brennstoffzellenanordnung oder den Motor gelangt, endet als Kohlendioxidemission.

Wenn der Heizwert des Restgases 21 für die Nutzung in einem Gasmotor nicht hoch genug ist, kann zusätzliches Einsatzgas in den Einsatz zum Motor eingespeist werden. Da das Restgas 21 noch einen hohen Anteil an Wasserstoff enthält, kann dieses auch zur Gewinnung von Wasserstoff genutzt werden, z.B. mittels einer zweiten Druckwechseladsorption oder alternativer Trenn-/Reinigungstechnik oder Rückführung in die Wasserstoffabtrennung (insbesondere als Spülgasrückführung zum Einlass der Druckwechseladsorption über einen Verdichter).

In Figur 2 ist ein Verfahren gemäß einer hier vorgeschlagenen Ausgestaltung veranschaulicht und insgesamt mit 100 bezeichnet.

In dem Verfahren 100 tritt an die Stelle der Feuerungsheizung 108 eine Brennstoffzellenanordnung 111, die mit dem Rest- oder Tailgas 21 gespeist wird. Als Alternative kann, wie erwähnt, auch ein Gasmotor verwendet werden. Ein Brennstoffzellenabgas bzw. ein entsprechendes Motorabgas ist mit 22, mittels der Brennstoffzellenanordnung 111 erzeugte elektrische Energie mit 23, und aus dem Verfahren ausgeführte weitere Elektrizität und/oder Wärme mit 24 bezeichnet. Elektrische Energie 23 dient in dem veranschaulichten Beispiel zur Beheizung in der Dampfproduktion 109 und/oder Dampfreformierung 102.

Weitere elektrische Energie, wie in Figur 1 mit 11 bezeichnet, aber ggf. in anderen Mengen bereitgestellt, dient in nicht gesondert bezeichneten Anteilen ebenfalls zum Betrieb der Dampfreformierung 102 und eines Elektroheizers 112, der Wärme 27 an die Dampfproduktion 109 abgibt. Elektrische Energie kann, anstelle von Dampf, auch zum "Auskochen" eines Waschmittels in einer Aminwäsche verwendet werden, um das Waschmittel auf diese Weise zu regenerieren.

## Patentansprüche

1. Verfahren (100) zur Gewinnung eines Wasserstoffprodukts (20), wobei das Verfahren (100) die folgenden Schritte umfasst:
Bereitstellen eines Produktgemischs (12) unter Verwendung einer elektrisch beheizten Reformierung (102), wobei das Produktgemisch (12) im wesentlichen Wasserstoff, Kohlenmonoxid und Kohlendioxid enthält;
Bereitstellen eines Trenneinsatzgases (19) unter Verwendung des Produktgemischs (12) oder eines Teils hiervon, wobei das Trenneinsatzgas (19) Wasserstoff und Kohlenmonoxid enthält;
Bereitstellen des Wasserstoffprodukts (20) und eines Restgases (21) unter Verwendung des Trenneinsatzgases (19) oder eines Teils hiervon und unter Verwendung einer Wasserstoffabtrennung (107);
Bereitstellen von elektrischer Energie (23, 24) unter Verwendung des Restgases (21) oder eines Teils hiervon sowie einer Brennstoffzellenanordnung (111) und/oder eines Gasmotors, wobei die elektrisch beheizte Reformierung (102) unter Verwendung der elektrischen Energie (23) oder eines Teils hiervon betrieben und/oder in dem Verfahren (100) verwendeter Dampf (9, 10, 13) unter Verwendung der elektrischen Energie (23) oder eines Teils hiervon bereitgestellt wird.

2. Verfahren (100) nach Anspruch 1, wobei das Bereitstellen des Trenneinsatzgases (19) eine Aufbereitung des Produktgemischs (12) oder eines Teils hiervon umfasst.

3. Verfahren (100) nach Anspruch 2, wobei die Aufbereitung eine Hoch-, Mittel-, Isothermal- und/oder Niedertemperaturkonvertierung von Kohlenmonoxid und Wasser zu Kohlendioxid und Wasserstoff umfasst.

4. Verfahren (100) nach Anspruch 2 oder 3, wobei die Aufbereitung eine Kohlendioxidabtrennung (105) umfasst, in der ein erster Kohlendioxidstrom (17) bereitgestellt wird.

5. Verfahren (100) nach Anspruch 4, wobei der erste Kohlendioxidstrom (17) oder ein Teil hiervon unter Bereitstellung eines zweiten Kohlendioxidstroms (18) einer Kohlendioxidaufbereitung (106) unterworfen wird.

6. Verfahren (100) nach Anspruch 5, wobei die Kohlendioxidaufbereitung (106) eine Trocknung, Verdichtung und/oder Verflüssigung umfasst.

7. Verfahren (100) nach Anspruch 5 oder 6, wobei der zweite Kohlendioxidstrom (18) oder ein Teil hiervon einer Kohlendioxidsequestrierung unterworfen wird.

8. Verfahren (100) nach einem der vorstehenden Ansprüche, wobei die Wasserstoffabtrennung (107) unter Verwendung einer Druckwechseladsorptionseinrichtung durchgeführt wird.

9. Anlage zur Gewinnung eines Wasserstoffprodukts (20), wobei die Anlage zur Durchführung der folgenden Schritte eingerichtet ist:
Bereitstellen eines Produktgemischs (12) unter Verwendung einer elektrisch beheizten Reformierung (102), wobei das Produktgemisch (12) im wesentlichen Wasserstoff, Kohlenmonoxid und Kohlendioxid enthält;
Bereitstellen eines Trenneinsatzgases (19) unter Verwendung des Produktgemischs (12) oder eines Teils hiervon, wobei das Trenneinsatzgas (19) Wasserstoff und Kohlenmonoxid enthält;
Bereitstellen des Wasserstoffprodukts (20) und eines Restgases (21) unter Verwendung des Trenneinsatzgases (19) oder eines Teils hiervon und unter Verwendung einer Wasserstoffabtrennung (107);
Bereitstellen von elektrischer Energie (23, 24) unter Verwendung des Restgases (21) oder eines Teils hiervon und unter Verwendung einer Brennstoffzellenanordnung (111) und/oder eines Gasmotors, wobei die elektrisch beheizte Reformierung (102) unter Verwendung der elektrischen Energie (23) oder eines Teils hiervon betrieben und/oder in dem Verfahren (100) verwendeter Dampf (9, 10, 13) unter Verwendung der elektrischen Energie (23) oder eines Teils hiervon bereitgestellt wird.

10. Anlage nach Anspruch 9, wobei die Anlage zur Durchführung eines Verfahrens nach einem der Ansprüche 1 bis 8 eingerichtet ist.
